# EUROPÄISCHE PATENTANMELDUNG

(11) **EP 1 302 893 A1**
(43) Veröffentlichungstag der Anmeldung: **16.04.2003**
(21) Anmeldenummer: 02002422.0
(22) Anmeldetag: 01.02.2002
(51) Int. Cl.: G06K 19/077, G11B 20/00, G11B 23/28, G06K 19/04

(54) **Opto-elektronischer Datenträger mit appliziertem Transponder**

(30) Priorität: 16.10.2001 DE 10150458
(71) Anmelder: X-ident GmbH, 52428 Jülich (DE)
(72) Erfinder: Grünberg, Dietmar, 58540 Meinerzhagen (DE)
(74) Vertreter: Sternagel, Fleischer, Godemeyer & Partner Patentanwälte

(57) **Zusammenfassung**

Bei einem Opto-elektronischer Datenträger, insbesondere CD, DVD, etc., mit einem Transponder (21) und/oder einer Transponder-Antenne (5, 7, 9, 12, 14, 15, 16, 17, 18), ist der Transponder (21) und/oder die Transponder-Antenne (5, 7, 9, 12, 14, 15, 16, 17, 18) asymmetrisch oder symmetrisch zu einem Zentrum des Datenträgers mit einem vorbestimmbaren oder vorbestimmten Verhältnis von überdeckter auf- oder eingebrachter Reflexionsschicht und nicht reflektierenden Bereichen auf zumindest einer Oberfläche des Datenträgers (1) aufbringbar oder aufgebracht.

## Beschreibung

Die Erfindung betrifft einen opto-elektronischen Datenträger, insbesondere CD, DVD etc., mit einem Transponder und/oder einer Transponder-Antenne, einen RFID-Transponder mit einer aufgebrachten Transponder-Antenne und/oder zumindest einem als Antenne wirkenden Element, insbesondere zur Verwendung mit einem zu kennzeichnenden Datenträger, ebenso eine Transponder-Antenne zur Verwendung mit einem solchen Transponder bzw. mit einem solchen opto-elektronischen Datenträger, ein entsprechend ausgerüstetes Etikett sowie ein Verfahren zum Aufbringen zumindest eines Transponders und/oder einer Transponder-Antenne auf einem opto-elektronischen Datenträger, insbesondere einer CD, DVD oder dergleichen.

Es ist bekannt, opto-elektronische Datenträger, insbesondere CDs, DVDs etc., mit einem Transponder und/oder einer Transponder-Antenne zu versehen, wobei die Antenne ausschließlich rotationssymmetrisch zum Mittelloch der CD oder DVD und zum äußeren Rand von dieser auf dem Datenträger bzw. der CD oder DVD aufgebracht wird. Üblicherweise wird eine solche Applikation auf der einen Oberfläche von CD oder DVD, insbesondere DVD-5 und DVD-9, vorgesehen, wobei die von dem Transponder überdeckte Fläche für die Funktion der CD bzw. DVD ohne Einfluss ist. Bei bestimmten DVDs, insbesondere DVD-10 und DVD-18, muss jedoch eine Abspielbarkeit von beiden Seiten gewährleistet werden, so dass hier nur der Bereich innerhalb eines sog. Stapelwulstes um das Mittelloch herum mit dem Transponder symmetrisch versehen werden kann, wobei dieser Bereich sehr eng begrenzt ist. Die von der Transponder-Antenne aufgespannte Fläche kann, um keinen relevanten negativen wechselseitigen Einfluss bzw. eine Verringerung des Einflusses zwischen Transponder und metallisierten Bereichen der DVD zu bekommen, maximal der von dem Stapelwulst begrenzten inneren Fläche entsprechen. Bei CDs ist die zum Mittelloch der CD ausgerichtete und von dem Stapelwulst begrenzte Fläche zumeist nicht metallisiert, wohingegen bei DVDs üblicherweise die Fläche der DVD bis zu einem engen Radius von wenigen Millimetern um das Mittelloch herum gesputtert wird. Das gesputterte Schichtmaterial ist je Schicht bei CDs üblicherweise etwa 50 nm, bei DVDs etwa 30 nm stark. Daher sind die Güteverluste bei Transponder-Antennen bei der Verwendung mit CDs etwa doppelt so groß wie bei der Verwendung mit DVDs. Im Stand der Technik wird diesem Nachteil dadurch begegnet, dass die Transponder-Antenne symmetrisch so dimensioniert wird, dass sie dem nicht metallisierten Bereich gegenübersteht, wodurch die Feldausbreitung weniger beeinflusst wird. Die von der Transponder-Antenne aufgespannte relativ kleine Fläche wirkt sich dabei nachteilig auf die erzielbare Kommunikationsreichweite aus.

Mittels solcher auf Datenträgern applizierter Transponder werden die Datenträger gekennzeichnet, insbesondere für die Identifikation und Artikelsicherung in Büchereien oder Ausleihen, ggf. auch in Geschäften für Vorführ-CDs und -DVDs.

Es hat sich jedoch mit den bekannten Lösungen herausgestellt, dass von der Metallisierung einer CD oder DVD negative Einflüsse auf die Kommunikationseigenschaften des auf dieser aufgebrachten RFID-Transponders rückwirken, dass also aufgrund der Metallisierung der opto-elektronischen Datenträger die Transponder nicht in jedem Falle funktionstüchtig sind. Diese negative Rückwirkung wird als "near-metalproblem" bezeichnet, also als ein Problem aufgrund des Einflusses des in der Nähe zum Transponder befindlichen metallisierten Bereiches der CD bzw. DVD auf den Transponder und seine Kommunikationseigenschaften.

Der Erfindung liegt daher die Aufgabe zugrunde, einen opto-elektronischen Datenträger mit einem Transponder und/oder einer Transponder-Antenne so auszurüsten und ein Verfahren zum Ausrüsten eines opto-elektronischen Datenträgers mit einem Transponder und/oder einer Transponder-Antenne zu schaffen, dass das vorstehend genannte Problem nicht mehr auftritt, also die negativen Einflussnahmen zwischen dem metallisierten Bereich eines opto-elektronischen Datenträgers und dem Transponder vermindert oder sogar vollständig eliminiert werden und eine Reichweitenerhöhung des Transponders erzielt werden kann.

Die Aufgabe wird durch einen opto-elektronischen Datenträger nach dem Oberbegriff des Anspruchs 1 dadurch gelöst, dass der Transponder und/oder die Transponder-Antenne asymmetrisch oder symmetrisch zu einem Zentrum des Datenträgers mit einem vorbestimmbaren oder vorbestimmten Verhältnis von überdeckter auf- oder eingebrachter Reflexionsschicht und nicht reflektierenden Bereichen auf zumindest einer Oberfläche des Datenträgers aufgebracht ist oder aufgebracht werden kann. Die Aufgabe wird durch einen RFID-Transponder mit einer aufgebrachten Transponder-Antenne nach dem Oberbegriff des Anspruchs 5 dadurch gelöst, dass der Transponder und/oder die Transponder-Antenne eine solche Form aufweist, dass der Transponder und/oder die Transponder-Antenne asymmetrisch oder symmetrisch zu einem Zentrum des Datenträgers mit einem vorbestimmbaren oder vorbestimmten Verhältnis von überdeckter auf- oder eingebrachter Reflexionsschicht und nicht reflektierenden Bereichen auf dem zu kennzeichnenden Datenträger, insbesondere opto-elektronischen Datenträger aufbringbar ist. Durch eine Antenne nach dem Oberbegriff des Anspruchs 14 wird die Aufgabe dadurch gelöst, dass die Antenne so geformt ist, dass sie asymmetrisch oder symmetrisch zu einem Zentrum des Datenträgers unter Überdecken eines vorgebbaren oder vorgegebenen Verhältnisses von auf- oder eingebrachter Reflexionsschicht und nicht reflektierenden Bereichen auf dem Datenträger aufbringbar ist. Durch ein Verfahren zum Aufbringen zumindest eines Transponders und/oder einer Transponder-Antenne auf einem opto-elektronischen Datenträger nach dem Oberbegriff des Anspruchs 16 wird die Aufgabe dadurch gelöst, dass der Transponder und/oder die Transponder-Antenne in zu einem Zentrum des Datenträgers asymmetrischer Ausrichtung auf zumindest einer Oberfläche des Datenträgers aufgebracht wird. Weiterbildungen der Erfindung sind in den abhängigen Ansprüchen definiert.

Durch das asymmetrische Aufbringen des Transponders und/oder der Transponder-Antenne auf dem Datenträger kann der negative Einfluss des metallisierten Bereichs des opto-elektronischen Datenträgers, insbesondere der CD oder DVD, auf den Transponder deutlich vermindert werden. Bei Versuchen hat sich herausgestellt, dass sogar bei einer Anbringung der Transponder auf beiden Seiten eines opto-elektronischen Datenträgers die Funktionsfähigkeit der Transponder durch die reflektierenden und nicht reflektierenden Bereiche der CD oder DVD weniger beeinflusst wird. Hierbei kann insbesondere die Transponder-Antenne sich sogar quer über die Reflektionsschicht hinweg erstrecken. Vorzugsweise erstreckt sie sich jedoch zumindest in einem Teilbereich über einen nicht oder schwach reflektierenden, insbesondere metallisierten Bereich hinweg. Aufgrund der asymmetrischen Anordnung des Transponders und/oder der Transponder-Antenne auf dem Datenträger wirkt sich bei Rotation des Datenträgers umgekehrt auch das Aufbringen des Transponders bzw. der Transponder-Antenne im Wesentlichen nicht negativ auf die Abspielqualität des Datenträgers aus.

Bei der Kommunikation mit Transpondern können bekanntlich durch vergleichsweise große Transponder-Antennen und Transponder-Schreib-/Leseeinrichtungs-Antennen große Kommunikationsreichweiten erzielt werden. Der größte Anteil des magnetischen Feldes durchflutet den metallisierten bzw. reflektierenden Bereich der CD bzw. DVD, in welchem der Wellenwiderstand signifikant groß ist, was eine entsprechende Magnetfelddämpfung zur Folge hat. Zudem führt die Reflexionsschicht in der CD bzw. DVD zu einer bedeutenden Verringerung der Induktivität der Transponder-Antenne, was eine Verringerung der Empfangs- und Sendeleistung in Bezug auf die Kommunikationsreichweite des Transponders mit sich bringt. Der bei einer CD bzw. DVD zur Verfügung stehende nichtmetallisierte bzw. nicht reflektierende Bereich beträgt maximal 9,6 cm². Dieser Bereich erweist sich für eine möglichst großzügige Ausnutzung zum Anordnen einer Antenne als besonders vorteilhaft. Wird in diesem Bereich die Antenne angeordnet, wird die erreichbare Kommunikationsreichweite aufgrund der maximal möglichen aufgespannten Antennenfläche deutlich beschränkt. Daher kann durch das erfindungsgemäße Vorsehen einer asymmetrisch auf einem opto-elektronischen Datenträger vorgesehenen Transponder-Antenne eine für die magnetische Feldausbreitung möglichst große Ausnutzung des nicht reflektierenden Bereichs unter Wahrung einer von der Transponder-Antenne aufgespannten Fläche erzielt werden, die groß und für die magnetische Flussdichte oder Induktion wirksam ist, so dass eine gegenüber dem magnetischen Feld sensitive Transponder-Antenne mit geringen Güteverlusten ausgebildet werden kann, im Wesentlichen ohne die Funktionalität des Datenträgers, insbesondere der CD oder DVD einzuschränken. Ein optimales Verhältnis von überdeckter nicht reflektierender und mit einer Reflexionsschicht versehener bzw. nichtmetallisierter und metallisierter Fläche wird angestrebt und kann bevorzugt anwendungsspezifisch eingestellt werden, insbesondere unter Überdecken eines möglichst großen Anteils nichtmetallisierter bzw. nicht reflektierender Fläche. Besonders bevorzugt wird die letztgenannte Fläche vollständig ausgenutzt bzw. überdeckt, um eine optimale Reichweitenerhöhung des Antennensignals zu erhalten.

Zur Fixierung eines opto-elektronischen Datenträgers in Antriebsmechanismen und Verpackungen ist üblicherweise eine mittlere Durchgangsöffnung oder ein Mittelloch vorgesehen. Transponder und/oder Transponder-Antenne sind vorzugsweise im Wesentlichen asymmetrisch zu dieser bzw. diesem bzw. einem fiktiven Mittelpunkt oder Zentrum und/oder zu einem äußeren Rand des opto-elektronischen Datenträgers angeordnet. Durch die Asymmetrie kann eine höhere Reichweite erzielt werden.

Als Reflexionsschicht sind insbesondere Schichten, die einen hohen Wellenwiderstand erzeugen und/oder Teilreflexionsfähigkeit, insbesondere Aluminium, Gold, Oxide und/oder Legierungen von diesen vorgesehen. Bevorzugt ist das Verhältnis der von Transponder und/oder Transponder-Antenne überdeckten auf- oder eingebrachten Reflexionsschicht und nicht reflektierenden Bereiche zur Reichweitenerhöhung einstellbar. Bei einer CD ist im Allgemeinen der die Durchgangsöffnung umgebende Bereich im Innern der CD nicht reflektierend, wohingegen bei einer DVD dieser Bereich im Wesentlichen schwach bis normal reflektierend sein wird. In dem eine Durchgangsöffnung des Datenträgers umgebenden Bereich kann bevorzugt der Transponder und/oder die Transponder-Antenne angeordnet sein bzw. sich durch diesen hindurch erstrecken. Hierdurch wird zumindest ein Einfluss auf die Antennenqualität durch die mit einer Reflexionsschicht versehenen Bereiche des Datenträgers wesentlich vermindert. Besonders bevorzugt erstreckt sich der Transponder und/oder die Antenne über einem gesputterten und/oder metallisierten Bereich und/oder einem im Wesentlichen nichtgesputterten und/oder nichtmetallisierten Bereich und/oder schwach gesputterten und/oder schwach metallisierten Bereich. Um eine höhere Reichweite der Antenne zu erzielen, erstreckt sich der Transponder bzw. zumindest dessen Antenne vorzugsweise sowohl über einen metallisierten als auch nichtmetallisierten Bereich und/oder schwach metallisierten Bereich hinweg unter Einstellen eines optimalen Verhältnisses der überdeckten Bereiche.

Als besonders bevorzugt erweist es sich, dass der Transponder mit einer asymmetrisch zu einem Zentrum des Transponders vorgesehenen Durchgangsöffnung versehen ist. Hierdurch kann ein asymmetrisches Aufbringen des Transponders auf dem Datenträger erleichtert werden, da lediglich die Durchgangsöffnung in diesem und die in dem Datenträger vorgesehene Durchgangsöffnung fluchtend übereinander ausgerichtet zu werden brauchen. Ist keine solche Durchgangsöffnung in dem Transponder vorgesehen, wird dieser vorzugsweise außerhalb der Durchgangsöffnung des Datenträgers auf diesem angeordnet. Soll das Anordnen gezielt erfolgen, wird vorteilhaft eine entsprechende Form des Transponders und/oder der Transponder-Antenne gewählt bzw. der Datenträger an der entsprechenden Stelle markiert, so dass die bezweckte Ausrichtung des Transponders problemlos erreicht werden kann, vorzugsweise auch in der laufenden Produktion.

Das für Träger- und/oder Deckschicht des Transponders verwendete Material, auf oder unter dem die Transponder-Antenne anordbar und/oder angeordnet ist, ist bevorzugt transparent und/oder transluzent. Hierdurch kann eine eventuelle optische Kennzeichnung und Beschriftung des Datenträgers besser optisch und visuell erkannt werden. Die optische und visuelle Sichtbarkeit und Lesbarkeit einer auf dem Datenträger aufgebrachten Kennzeichnung oder Beschriftung wird damit gewährleistet, insbesondere wenn die Transponder auf beiden Seiten des opto-elektronischen Datenträgers aufgebracht werden.

Vorzugsweise weist der hier vorteilhaft verwendbare Transponder eine Arbeitsfrequenz von 113 kHz bis 24,1 GHz, insbesondere 13 MHz bis 2,45 GHz, insbesondere von 850 MHz bis 930 MHz, insbesondere 888 bis 889 MHz, insbesondere 868 bis 870 MHz, insbesondere 902 bis 928 MHz auf. Besonders bevorzugt wird eine Arbeitsfrequenz von 13,56 MHz, 860 MHz, 915 MHz bzw. 2,45 GHz. Darüber hinaus können noch folgende Frequenzen vorteilhaft verwendet werden: 119 bis 135 kHz, 6,78 MHz, 27,125 MHz, 433 MHz, 869 MHz, 915 MHz, 5,8 GHz.

Vorzugsweise weist der Transponder-Schwingkreis eine Güte von 10 bis 200 auf.

Besonders bevorzugt weist der Transponder eine Stärke von weniger als 500 µm auf. Es erweist sich als vorteilhaft, den oder die auf den opto-elektronischen Datenträger aufzufügenden Transponder möglichst dünn zu gestalten. Dadurch kann der Datenträger sogar in sehr kleinbauenden Abspielgeräten, die verhältnismäßig wenig Raum zum Einfügen des Datenträgers vorsehen, verwendet werden. Materialdicken von bis zu 500 µm erweisen sich somit als vorteilhaft. Die Anordnung funktioniert jedoch ebenso mit Transpondern größerer Stärke.

Vorzugsweise beträgt der Abstand zwischen der Oberfläche der obersten der Transponder-Antenne zugewandten Metallisierung des Datenträgers und der Unterseite der auf dieser aufgebrachten Transponder-Antenne 30 bis 1500 µm. Hierdurch ist es vorteilhaft möglich, das sog. "near-metalproblem" zu lösen, da weniger Kurzschlussströme auftreten und somit geringere Energie- und Güteverluste. Ein Auffügen einer Deckschicht als Schutzschicht auf der Antenne ist ebenfalls möglich, um die Antenne vor Abscheren zu schützen.

Der Transponder weist vorzugsweise eine zum Aufbringen auf den zu kennzeichnenden Datenträger geeignete, insbesondere selbstklebende Haftoder Klebeschicht auf. Hierdurch wird das Aufbringen des Transponders auf den Datenträger erleichtert. Der verwendete Kleber wird vorzugsweise so gewählt, dass eine Einflussnahme auf das Material des Datenträgers im Wesentlichen nicht gegeben ist. Vorzugsweise wird bei Verwendung von Artikelsicherungsetiketten, die auf dem Datenträger verbleiben sollen, beispielsweise bei Verwendung in Büchereien oder anderen Ausleihen, ein Kleber verwendet, der ein unbefugtes Ablösen des Transponders von dem Datenträger im Wesentlichen verhindert. Bei anderweitigen Verwendungen können entweder andere Klebstoffe verwendet werden oder es kann ein geeignetes Lösemittel eingesetzt werden, mit dem die ansonsten fest klebende oder haftende Kleberschicht wieder von dem Datenträger abgelöst werden kann.

Eine Antenne kann vorzugsweise eine im Wesentlichen symmetrische oder asymmetrische Form aufweisen. Sofern sie eine symmetrische Form aufweist, wird insbesondere durch ihre asymmetrische Anbringung auf dem opto-elektronischen Datenträger die mit der Erfindung bezweckte Asymmetrie, insbesondere zu einem Zentrum des Datenträgers erzeugt. Weist die Antenne hingegen eine asymmetrische Form auf, kann sie beliebig auf dem opto-elektronischen Datenträger positioniert werden, da sie selbst bereits die erforderliche Asymmetrie aufweist. Die gewünschte Reichweitenerhöhung kann jedoch auch dadurch erzielt werden, dass die Transponder-Antenne mit symmetrischer oder asymmetrischer Form symmetrisch auf dem Datenträger aufgebracht wird, sofern das Verhältnis von überdeckten nichtmetallisierten und metallisierten Bereichen entsprechend eingestellt wird. Optimal liegt die Leiterschleife der Antenne zu einem großen Teil über der kleinen nichtmetallisierten bzw. -gesputterten Fläche. Beide Bereiche, der nichtmetallisierte bzw. nicht reflektierenden bzw. -gesputterte und der metallisierte bzw. mit einer Reflexionsschicht versehene bzw. gesputterte, können somit bei entsprechend optimaler Einstellung des Verhältnisses der überdeckten Flächen genutzt werden.

Ein so ausgebildeter Transponder kann als Etikett ausgeführt werden, insbesondere als Artikelsicherungsetikett, das radiofrequentelektronische Eigenschaften aufweist. Ein solches Etikett kann neben einer Trägerschicht, auf bzw. unter der eine radiofrequente Antenne angeordnet ist, und einer Kleberschicht zum Aufkleben bzw. Auffügen auf einem opto-elektronischen Datenträger auch eine äußere Deckschicht aufweisen. die insbesondere bedruckbar sein kann. Das Etikett kann, wie bereits vorstehend ausgeführt, vollständig transparent oder transluzent sein, um die Sichtbarkeit bzw. Lesbarkeit einer Bedruckung des opto-elektronischen Datenträgers zuzulassen.

Transponder und/oder Transponder-Antenne können auf beiden Oberflächen des Datenträgers aufgebracht werden, wobei die Transponder-Antenne besonders bevorzugt durch Kleben, Drucken, Sputtern, Beschichten, Bedampfen. Ätzen, chemische, insbesondere stromlose, Verfahren, CVD, PVD, galvanische Verfahren, Elektroabscheidung, als Nanopartikel oder durch ein anderes Applikationsverfahren aufgebracht werden kann. Die Antenne kann somit auch direkt auf die Oberfläche des opto-elektronischen Datenträgers aufgedruckt, aufgedampft, aufgesputtert oder in anderer Weise aufgebracht werden, so dass eine Kleberschicht zum Aufbringen nicht mehr erforderlich ist. Ein unbefugtes Ablösen der Antenne kann dadurch mit dem Risiko behaftet sein, auch den Datenträger selbst dabei zu zerstören, da das Ablösen der Antenne auf mechanischem Wege erfolgen muss. Vorzugsweise wird die Antenne gegen ein Beschädigen mit einer Deckschicht, insbesondere transparenten Deckschicht, versehen, insbesondere als Transponderbestandteil. Diese Deckschicht kann beispielsweise eine Lack- oder eine auffügbare Kunststofffolie sein.

Bevorzugt wird eine Verpackung für einen solchen opto-elektronischen Datenträger mit zumindest einer weiteren Antenne zur Signalverstärkung und Reichweitenerhöhung versehen. Derartige Booster-Antennen werden vorteilhaft so angeordnet, dass sie sich in einer, zu der von der Transponder-Antenne aufgespannten oder parallelen Ebene befinden, um eine besonders gute Verstärkung des Antennensignals zu erzielen.

Zur näheren Erläuterung der Erfindung werden im Folgenden Ausführungsbeispiele anhand der Zeichnungen näher erläutert. Diese zeigen in:
- Figur 1: eine Draufsicht auf einen mit einer im Wesentlichen quadratischen Transponder-Antenne erfindungsgemäß ausgerüsteten Datenträger, z.B. eine CD bzw. DVD,
- Figur 2: eine Draufsicht auf eine zweite Ausführungsform einer erfindungsgemäß ausgerüsteten CD bzw. DVD mit rechteckiger Antenne,
- Figur 3: eine Draufsicht auf eine dritte Ausführungsform einer erfindungsgemäß ausgerüsteten CD oder DVD mit kreisförmiger Antenne,
- Figuren 4 und 5: Draufsichten auf weitere Ausführungsformen einer erfindungsgemäß ausgerüsteten CD oder DVD mit ellipsenförmigen Antennen,
- Figuren 6 und 7: Draufsichten auf weitere Ausführungsformen von erfindungsgemäß ausgerüsteten CDs oder DVDs mit dreieckigen Antennen,
- Figuren 8 und 9: Draufsichten auf weitere Ausführungsformen von erfindungsgemäß ausgerüsteten CDs oder DVDs mit mehreckigen Antennen,
- Figuren 10 bis 13: Draufsichten auf weitere Ausführungsformen von erfindungsgemäß ausgerüsteten CDs oder DVDs mit Antennen in beliebigen Formen.

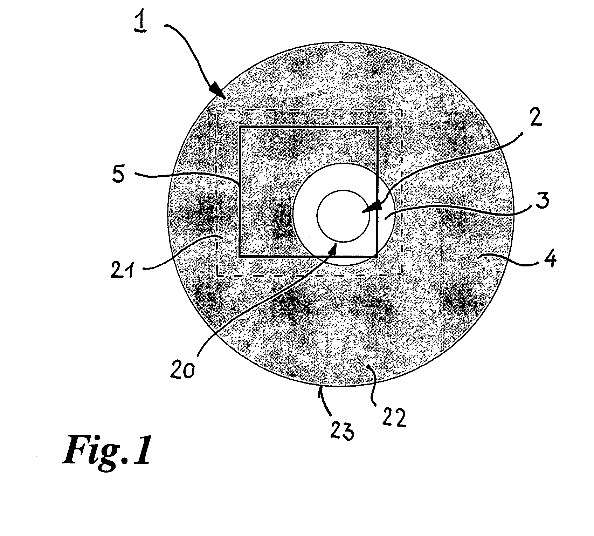

Figur 1 zeigt eine Draufsicht auf eine erste Ausführungsform eines erfindungsgemäß ausgerüsteten opto-elektronischen Datenträgers 1, beispielsweise einer CD oder DVD. Dieser weist eine mittlere Durchgangsöffnung 2 und einen diese umgebenden Bereich 3 auf, der bei einer Ausführungsform einer CD nichtgesputtert bzw. nichtmetallisiert ist und bei einer Ausführungsform einer DVD nur schwach bis normal gesputtert oder metallisiert ist. Dieser erste Bereich 3 wird umgeben von einem zweiten Bereich 4, der gesputtert bzw. metallisiert ist und die Daten der CD bzw. DVD trägt. Außerdem ist eine Transponder-Antenne 5 schematisiert dargestellt, ohne integrierten Schaltkreis und Kondensator. Ein zugehöriger Transponder 21 ist lediglich gestrichelt gezeigt. Dieser weist eine Durchgangsöffnung 20 auf, die über der Durchgangsöffnung 2 des Datenträgers fluchtend positioniert ist. Der Transponder 21 ist auf der ersten Oberfläche 22 des Datenträgers 1 angeordnet. Es kann aber auch auf dessen gegenüberliegender Oberfläche 23 ein solcher Transponder positioniert werden. Die Transponder-Antenne 5 ist im Wesentlichen quadratisch und erstreckt sich asymmetrisch zu der Durchgangsöffnung 2 und einem äußeren Rand 6 des opto-elektronischen Datenträgers 1 über den ersten und zweiten Bereich des Datenträgers hinweg. Die Transponder-Antenne kann dabei Teil eines RFID(radiofrequenter Identifikations)-Transponders sein, der aktiv oder passiv arbeitet, und einen elektrischen Schwingkreis aufweist, bestehend aus der Antenne, die eine Leiterspule oder ein Dipol sein kann, einem nicht dargestellten Kondensator, der in dem RFID-Schaltkreis integriert sein kann oder separat von diesem vorgesehen oder teilweise in diesen integriert und teilweise separat aufgebaut ist, wobei der Schaltkreis selbst integriert oder diskret aufgebaut sein kann, und einem solchen RFID-Schaltkreis, der insbesondere integriert ist und bevorzugt einen Speicher beinhaltet, der entweder nur ausgelesen werden kann oder auslesbar und beschreibbar ist oder in einen nur auslesbaren und einen auslesbaren und beschreibbaren Teil segmentiert ist. Die Antenne, der Kondensator und der integrierte Schaltkreis sind galvanisch so kontaktiert, dass ein elektrischer Schwingkreis im Sinne der RFID-Transponderfunktionalität ausgebildet wird. Die übrigen Elemente des Transponders sind jedoch in Figur 1 sowie in den weiteren Figuren nicht dargestellt.

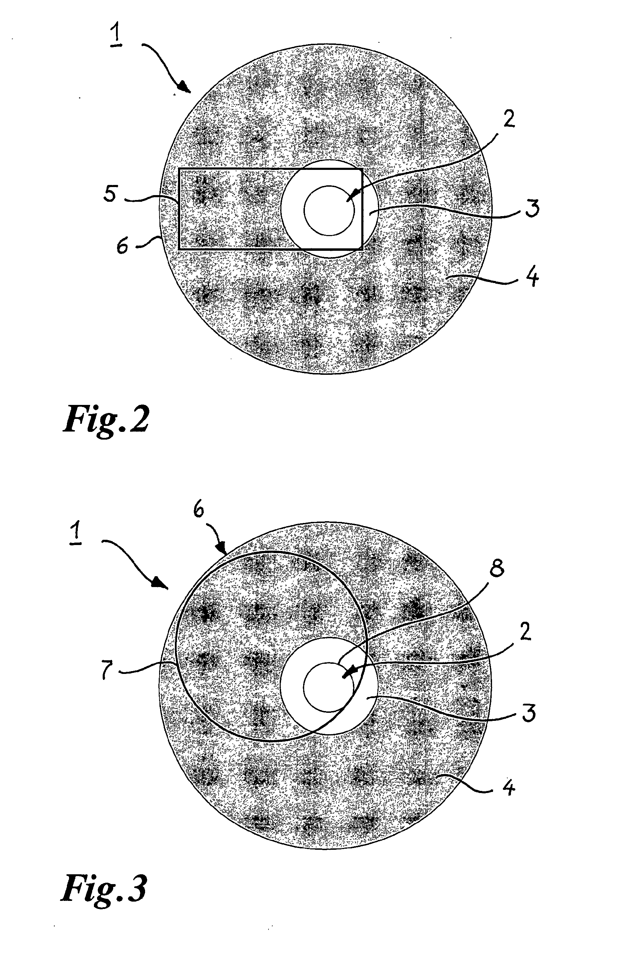

Der Aufbau des Datenträgers in Figur 2 entspricht im Wesentlichen dem in Figur 1, wobei die Transponder-Antenne 5 jedoch im Wesentlichen rechteckig ist. Sie erstreckt sich aus dem ersten Bereich 3, die Durchgangsöffnung 2 umgebend, in den zweiten metallisierten bzw. gesputterten Bereich 4 und überdeckt diesen im Wesentlichen bis zum äußeren Rand 6.

In der dritten Ausführungsform, die in Figur 3 dargestellt ist, ist eine im Wesentlichen kreisförmige Transponder-Antenne 7 vorgesehen. Diese erstreckt sich vom Rand 8 der Durchgangsöffnung 2 diese umgebend über den ersten Bereich 3 hinweg in den zweiten Bereich 4 und erstreckt sich im Wesentlichen bis an den äußeren Rand 6 des Datenträgers 1 heran.

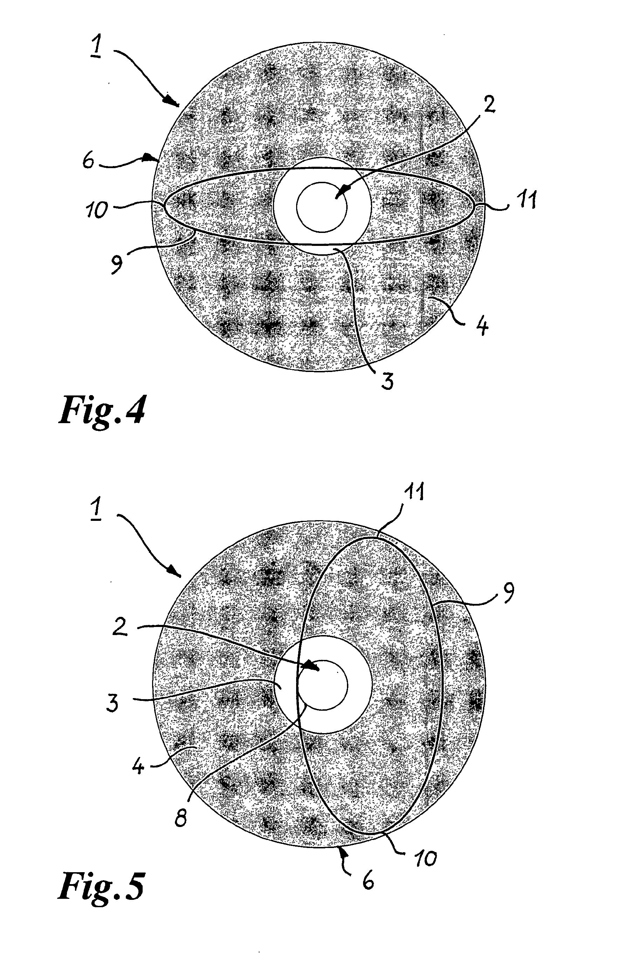

In der Ausführungsform gemäß Figur 4 weist eine Transponder-Antenne 9 eine Ellipsenform auf, wobei diese recht flach ist, so dass die Durchgangsöffnung 2 im Wesentlichen zentral in dieser liegt und sie sich nach links und rechts durch den ersten Bereich 3 hindurch in den zweiten metallisierten bzw. gesputterten Bereich 4 erstreckt, wobei diese Erstreckung symmetrisch sein kann, jedoch nicht notwendigerweise symmetrisch ist.

In der Ausführungsform gemäß Figur 5 ist die Transponder-Antenne 9 ebenfalls ellipsenförmig, jedoch weniger flach als in der Ausführungsform gemäß Figur 4 und liegt anlagernd an dem Rand 8 der Durchgangsöffnung, wobei sich der größte Teil der Antenne in dem zweiten metallisierten bzw. gesputterten Bereich 4 erstreckt. Im Bereich ihrer Extremstellen 10, 11 ragt die Transponder-Antenne 9 fast an den äußeren Rand 6 des Datenträgers heran.

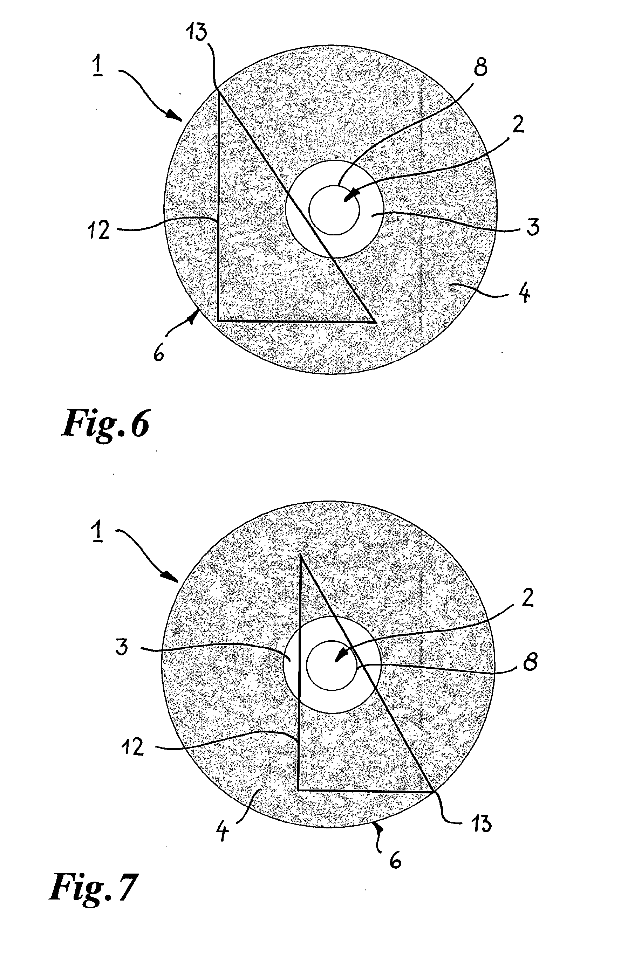

In der Ausführungsform gemäß Figur 6 ist eine im Wesentlichen dreieckige Transponder-Antenne 12 vorgesehen. Diese liegt vollständig außerhalb der Durchgangsöffnung 2 und erstreckt sich zum größten Teil im zweiten metallisierten bzw. gesputterten Bereich 4 des Datenträgers. Im Gegensatz hierzu ist die im Wesentlichen dreieckige Transponder-Antenne 12 in der Ausführungsform gemäß Figur 7 die Durchgangsöffnung 2 umgebend angeordnet, wobei zwei Seiten des Dreiecks nahe an dem Rand der Durchgangsöffnung angeordnet sind. Ebenso erstreckt sich die eine Spitze 13 des Dreiecks bis nahe an den äußeren Rand 6 des Datenträgers heran.

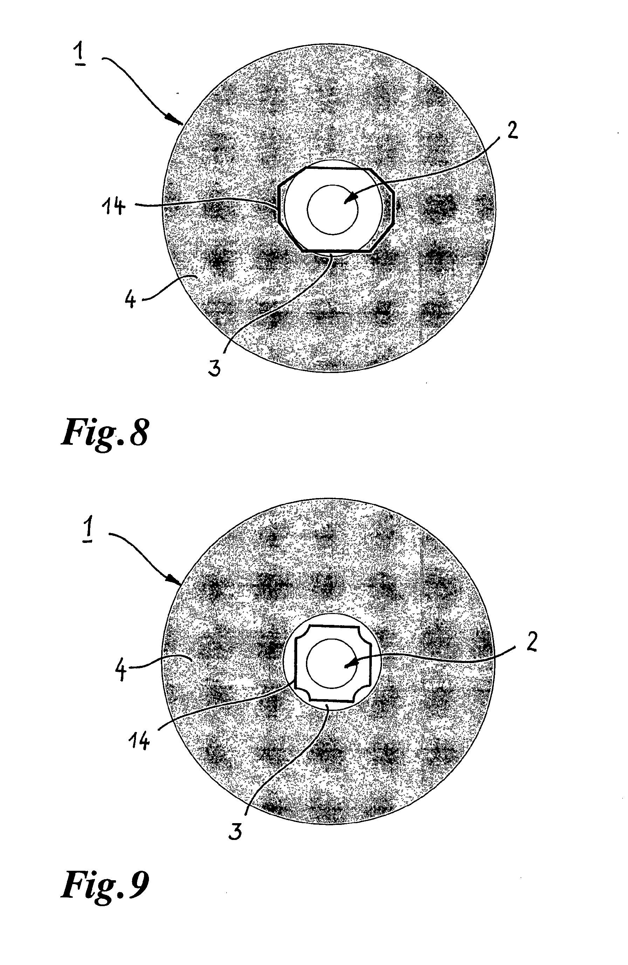

Figur 8 zeigt eine weitere Ausführungsform eines erfindungsgemäß ausgerüsteten opto-elektronischen Datenträgers, bei dem eine mehreckige Transponder-Antenne 14 die Durchgangsöffnung 2 des Datenträgers umgebend vorgesehen ist. Die Transponder-Antenne weist eine achteckige Form auf. Sie liegt im Wesentlichen so, dass sie den ersten Bereich 3 einbeschreibt. ist jedoch nicht symmetrisch, so dass sie an verschiedenen Stellen über diesen in den zweiten metallisierten bzw. gesputterten Bereich 4 hinausragt.

In der Ausführungsform gemäß Figur 9 weist die Transponder-Antenne 14 wiederum eine mehreckige Form auf, ist insbesondere achteckig, wobei jeweils zwischen zwei eng benachbarten Ecken eine Rundung vorgesehen ist anstelle einer geraden Verbindung. Die Transponder-Antenne 14 gemäß Figur 9 ist vollständig dem ersten Bereich 3 einbeschrieben, also in einen nichtgesputterten bzw. nichtmetallisierten Bereich bei Verwendung mit einer CD oder einen schwach bis normal gesputterten bzw. metallisierten Bereich bei Verwendung mit einer DVD.

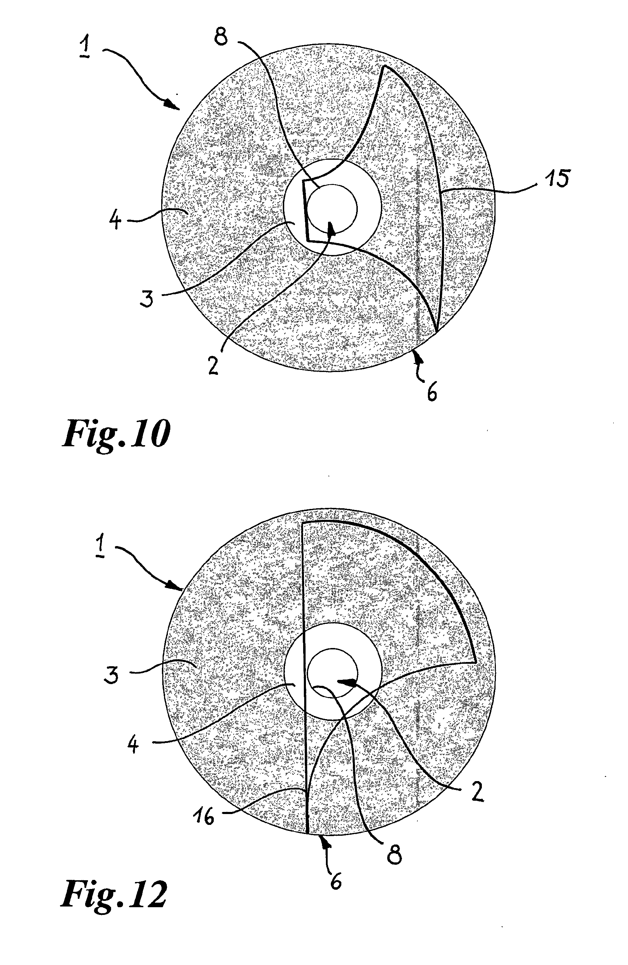

In der Ausführungsform gemäß Figur 10 ist eine beliebig geformte Transponder-Antenne 15 vorgesehen. Ein Teil der Transponder-Antenne tangiert die Durchgangsöffnung 2 und erstreckt sich von dort aus dem ersten Bereich 3 in den zweiten metallisierten bzw. gesputterten Bereich 4 hinein bzw. durch diesen hindurch bis nahe an den äußeren Rand 6 des Datenträgers. Die Transponder-Antenne 15 gemäß Figur 10 ist dabei im Wesentlichen ambossförmig.

Eine dreieckähnliche Form mit einer konvex- und einer konkavgeformten Seite ist in Figur 12 dargestellt. Die Transponder-Antenne 16 umgibt wiederum die Durchgangsöffnung 2 des Datenträgers und erstreckt sich mit einer Spitze bis an den äußeren Rand 6 von diesem heran. Mit der konvexgeformten Seite erstreckt sich die Transponder-Antenne 16 im Wesentlichen parallel zu dem äußeren Rand 6 des Datenträgers wiederum in dem zweiten metallisierten bzw. gesputterten Bereich 4.

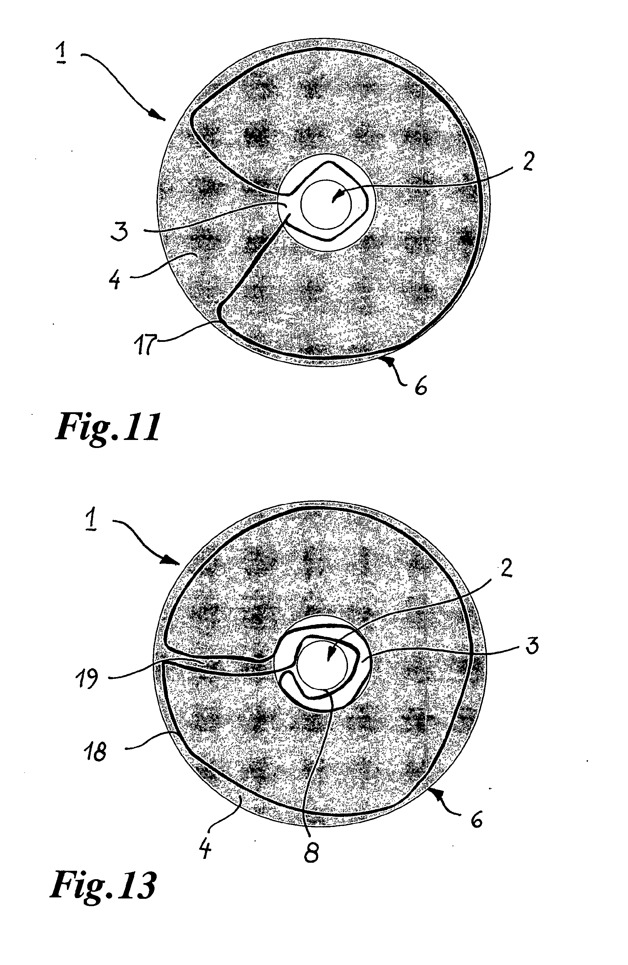

Weitere beliebige Formen von Transponder-Antennen 17, 18 sind in den Figuren 11 und 13 dargestellt. Die Transponder-Antenne 17 bildet eine Schleife, die sich im Wesentlichen um die Durchgangsöffnung 2 herum erstreckt, wobei ein schmaler Bereich frei bleibt und in diesen Bereich die Schleife zu dem äußeren Rand 6 des Datenträgers hingeführt ist und sich entlang diesem mit unterschiedlichem Abstand zu diesem etwa vier Fünftel des Kreises herum erstreckt. Demgegenüber ist die Schleife, die von der Transponder-Antenne 18 gemäß Figur 13 gebildet wird, mehrfach verschlungen. Sie umgibt ebenfalls im Wesentlichen vollständig, jedoch nicht ganz die Durchgangsöffnung 2 des Datenträgers, erstreckt sich dann jedoch im Bereich des Übergangsbereichs zwischen dem ersten Bereich 3 und dem zweiten Bereich 4 des Datenträgers wiederum in der Nähe des äuβeren Randes 6 des Datenträgers. Hierbei wird der größte Teil des von dem Datenträger gebildeten Vollkreises von der Transponder-Antennenschleife überdeckt, lediglich ein schmaler Bereich 19 wird nicht von der Schleife der Transponder-Antenne überdeckt.

Neben den im Vorstehenden geschilderten und in den Figuren dargestellten Ausführungsformen können noch zahlreiche weitere gebildet werden, bei denen jeweils der Transponder bzw. die Transponder-Antenne asymmetrisch geformt und/oder asymmetrisch oder symmetrisch mit einem vorbestimmbaren Verhältnis von nichtmetallisierten und metallisierten Bereichen auf einem opto-elektronischen Datenträger aufgebracht ist.

### Bezugszeichenliste

- 1: opto-elektronischer Datenträger
- 2: Durchgangsöffnung
- 3: erster Bereich
- 4: zweiter metallisierter/gesputterter Bereich
- 5: Transponder-Antenne
- 6: äußerer Rand
- 7: Transponder-Antenne
- 8: Rand der Durchgangsöffnung
- 9: Transponder-Antenne
- 10: Extremstellen
- 11: Extremstellen
- 12: Transponder-Antenne
- 13: Spitze
- 14: Transponder-Antenne
- 15: Transponder-Antenne
- 16: Transponder-Antenne
- 17: Transponder-Antenne
- 18: Transponder-Antenne
- 19: schmaler nicht überdeckter Bereich
- 20: Durchgangsöffnung Transponder
- 21: Transponder
- 22: erste Oberfläche
- 23: zweite Oberfläche

## Patentansprüche

1. Opto-elektronischer Datenträger, insbesondere CD, DVD, etc., mit einem Transponder (21) und/oder einer Transponder-Antenne (5, 7, 9, 12, 14, 15, 16, 17, 18),
**dadurch gekennzeichnet, dass**
der Transponder (21) und/oder die Transponder-Antenne (5, 7, 9, 12, 14, 15, 16, 17, 18) asymmetrisch oder symmetrisch zu einem Zentrum des Datenträgers mit einem vorbestimmbaren oder vorbestimmten Verhältnis von überdeckter auf- oder eingebrachter Reflexionsschicht und nicht reflektierenden Bereichen auf zumindest einer Oberfläche des Datenträgers (1) aufbringbar oder aufgebracht ist.

2. Opto-elektronischer Datenträger nach Anspruch 1,
**dadurch gekennzeichnet, dass**
der Transponder (21) und/oder die Transponder-Antenne (5, 7, 9, 12, 14, 15, 16, 17, 18) sich über einem gesputterten und/oder reflektierenden oder metallisierten Bereich (4) und/oder einem im Wesentlichen nichtgesputterten und/oder nichtreflektierenden oder nichtmetallisierten Bereich (3) und/oder schwach gesputterten und/oder schwach reflektierenden oder metallisierten Bereich (3) erstreckt.

3. Opto-elektronischer Datenträger nach Anspruch 1 oder 2,
**dadurch gekennzeichnet, dass**
das Verhältnis von von Transponder (21) und/oder Transponder-Antenne (5, 7, 9, 12, 14, 15, 16, 17, 18) überdeckter auf- oder eingebrachter Reflexionsschicht und reflektierenden Bereichen zur Reichweitenerhöhung einstellbar ist.

4. Opto-elektronischer Datenträger nach einem der vorstehenden Ansprüche,
**dadurch gekennzeichnet, dass**
der Abstand zwischen der Oberfläche (22, 23) der obersten der Transponder-Antenne zugewandten Reflexionsschicht oder Metallisierung des Datenträgers (1) und der Unterseite der auf dieser aufgebrachten Transponder-Antenne (5, 7, 9, 12, 14, 15, 16, 17, 18) 30 bis 1500 µm beträgt.

5. RFID-Transponder (21) mit Tranponder-Antenne (5, 7, 9, 12, 14, 15, 16, 17, 18) und/oder zumindest einem als Antenne wirkenden Element, insbesondere zur Verwendung mit einem zu kennzeichnenden Datenträger (1) nach einem der vorstehenden Ansprüche,
**dadurch gekennzeichnet, dass**
der Transponder (21) und/oder die Transponder-Antenne (5, 7, 9, 12, 14, 15, 16, 17, 18) eine solche Form aufweist, dass der Transponder und/oder die Transponder-Antenne asymmetrisch oder symmetrisch zu einem Zentrum des Datenträgers mit einem vorbestimmbaren oder vorbestimmten Verhältnis von überdeckter auf- oder eingebrachter Reflexionsschicht und nicht reflektierenden Bereichen auf dem zu kennzeichnenden Datenträger (1), insbesondere opto-elektronischen Datenträger, aufbringbar ist.

6. Transponder nach Anspruch 5,
**dadurch gekennzeichnet, dass**
der Transponder mit einer asymmetrisch zu einem Zentrum des Transponders vorgesehenen Durchgangsöffnung (20) versehen ist.

7. RFID-Transponder, insbesondere nach Anspruch 5 oder 6, mit einer Transponder-Antenne (5, 7, 9, 12, 14, 15, 16, 17, 18) und/oder zumindest einem als Antenne wirkenden Element, insbesondere zur Verwendung mit einem zu kennzeichnenden Datenträger (1) nach einem der Ansprüche 1 bis 5,
**dadurch gekennzeichnet, dass**
das für eine Träger- und/oder Deckschicht des Transponders verwendete Material, auf oder unter dem die Transponder-Antenne (5, 7, 9, 12, 14, 15, 16, 17, 18) anordbar oder angeordnet ist, transparent und/oder transluzent ist.

8. Transponder nach einem der Ansprüche 5 bis 7,
**dadurch gekennzeichnet, dass**
der Transponder eine Arbeitsfrequenz von 113 kHz bis 24,1 GHz, insbesondere von 850 MHz bis 930 MHz, insbesondere 888 bis 889 MHz, insbesondere 868 bis 870 MHz, insbesondere 902 bis 928 MHz aufweist.

9. Transponder nach Anspruch 8,
**dadurch gekennzeichnet, dass**
der Transponder eine Arbeitsfrequenz von 13,56 MHz oder 2,45 GHz aufweist.

10. Transponder nach einem der Ansprüche 5 bis 9,
**dadurch gekennzeichnet, dass**
der Transponder eine Stärke von ≤ 500 µm aufweist.

11. Transponder nach einem der Ansprüche 5 bis 10,
**dadurch gekennzeichnet, dass**
der Transponder eine zum Aufbringen auf den zu kennzeichnenden Datenträger (1) geeignete, insbesondere selbstklebende Haft- oder Klebeschicht aufweist.

12. Transponder nach einem der Ansprüche 5 bis 11,
**dadurch gekennzeichnet, dass**
die Transponder-Antenne (5, 7, 9, 14) eine im Wesentlichen symmetrische Form aufweist oder dass die Transponder-Antenne (12, 15, 16, 17, 18) eine asymmetrische Form aufweist.

13. Antenne (5, 7, 9, 12, 14, 15, 16, 17, 18) zur Verwendung in einem Transponder (21), insbesondere nach einem der Ansprüche 5 bis 12, und mit einem opto-elektronischen Datenträger (1), insbesondere nach einem der Ansprüche 1 bis 4,
**dadurch gekennzeichnet, dass**
die Antenne (5, 7, 9, 12, 14, 15, 16, 17, 18) so geformt ist, dass sie asymmetrisch oder symmetrisch zu einem Zentrum des Datenträgers unter Überdecken eines vorgebbaren oder vorgegebenen Verhältnisses von auf- oder eingebrachter Reflexionsschicht und nicht reflektierenden Bereichen auf dem Datenträger (1) aufbringbar ist.

14. Etikett, insbesondere elektronisches, radiofrequentes Artikelsicherungsetikett,
**dadurch gekennzeichnet, dass**
das Etikett mit einem Transponder (21) nach einem der Ansprüche 6 bis 12 und/oder einer radiofrequenten Antenne (5, 7, 9, 12, 14, 15, 16, 17, 18) nach Anspruch 13 versehen ist.

15. Verfahren zum Aufbringen zumindest eines Transponders (21) und/oder einer Transponder-Antenne (5, 7, 9, 12, 14, 15, 16, 17, 18) auf einem opto-elektronischen Datenträger (1), insbesondere einer CD, DVD oder dergleichen,
**dadurch gekennzeichnet, dass**
der Transponder (21) und/oder die Transponder-Antenne (5, 7, 9, 12, 14, 15, 16, 17, 18) in zu einem Zentrum des Datenträgers asymmetrischer Ausrichtung auf zumindest einer Oberfläche des Datenträgers (1) aufgebracht wird.

16. Verfahren nach Anspruch 15,
**dadurch gekennzeichnet, dass**
der Transponder (21) und/oder die Transponder-Antenne (5, 7, 9, 12, 14, 15, 16, 17, 18) auf beiden Oberflächen des Datenträgers (1) aufgebracht wird.

17. Verfahren nach Anspruch 15 oder 16,
**dadurch gekennzeichnet, dass**
die Transponder-Antenne (5, 7, 9, 12, 14, 15, 16, 17, 18) durch Kleben, Drucken, Sputtern, Beschichten, Bedampfen, Ätzen, chemische, insbesondere stromlose, Verfahren, CVD, PVD, galvanische Verfahren, Elektroabscheidung, als Nanopartikel oder durch ein anderes Applikationsverfahren aufgebracht wird.

18. Verpackung für einen opto-elektronischen Datenträger nach einem der Ansprüche 1 bis 4,
**dadurch gekennzeichnet, dass**
die Verpackung mit zumindest einer weiteren Antenne zur Signalverstärkung und Reichweitenerhöhung versehen ist.
